(19) **Europäisches Patentamt**
**European Patent Office**
**Office européen des brevets**

(11) **EP 1 030 412 B1**

(12) **FASCICULE DE BREVET EUROPEEN**

(45) Date de publication et mention
de la délivrance du brevet:
**12.12.2007  Bulletin 2007/50**

(51) Int Cl.:
***H01S 3/063*** *(2006.01)*

(21) Numéro de dépôt: **00400417.2**

(22) Date de dépôt: **14.02.2000**

(54) **Amplificateur optique**

Optischer Verstärker

Optical amplifier

(84) Etats contractants désignés:
**AT BE CH CY DE DK ES FI FR GB GR IE IT LI LU MC NL PT SE**

(30) Priorité: **15.02.1999  FR 9901795**

(43) Date de publication de la demande:
**23.08.2000  Bulletin 2000/34**

(73) Titulaire: **Avanex Corporation Fremont, CA 94538 (US)**

(72) Inventeurs:
  • **Boubal, François,
    c/o Cabinet Ballot-Schmit
    94230 Cachan (FR)**

  • **Salet, Paul,
    c/o Cabinet Ballot-Schmit
    94230 Cachan (FR)**
  • **Bettiati, Mauro,
    c/o Cabinet Ballot-Schmit
    94230 Cachan (FR)**
  • **Gelly, Gérard,
    c/o Cabinet Ballot-Schmit
    94230 Cachan (FR)**

(74) Mandataire: **Feray, Valérie
    Feray Lenne Conseil
    39/41, avenue Aristide Briand
    92163 Antony (FR)**

(56) Documents cités:
    **WO-A-95/10868          WO-A-97/21124
    US-A- 4 130 343          US-A- 5 163 113**

## Description

La présente invention concerne le domaine des amplificateurs à fibres optiques principalement utilisés dans le cadre de la transmission optique d'information.

De tels amplificateurs sont principalement composés de deux coeurs concentriques : un coeur central monomode constitué d'un matériau amplificateur et destiné à la propagation du signal, et un coeur multimode, entourant le coeur monomode, utilisé pour la propagation d'un faisceau de pompage.

Le signal lumineux se propageant dans le coeur monomode de la fibre optique peut être émis par une source à 1.55 $\mu$m par exemple ou provenir de la facette de sortie d'une fibre optique. Ce signal lumineux porte l'information optique que l'on souhaite amplifier dans la fibre optique amplificatrice de la présente invention.

Le faisceau de pompage est émis par un laser à injection apte à émettre un faisceau d'une grande puissance. Le faisceau de pompage se propage dans le coeur multimode de la fibre optique et traverse régulièrement le coeur monomode. L'interaction entre le faisceau signal et le faisceau de pompage permet d'amplifier le premier en transmettant une partie de la puissance du faisceau de pompage au faisceau signal.

Les amplificateurs optiques à double coeur sont déjà bien connus de l'art antérieur.

En particulier, la demande de brevet US 561682 décrit la structure d'un amplificateur optique à double coeur. La figure 1 est une vue en coupe d'une fibre optique double coeur décrite dans ce brevet américain.

Une telle fibre optique est constituée d'un coeur central monomode 10 présentant les dimensions standards des fibres optiques utilisées en télécommunication. Ce coeur 10 est composé d'un matériau amplificateur. Il peut, par exemple, être dopé par de l'Ytterbium et/ou de l'Erbium.

Un coeur multimode 12 entoure le coeur monomode 10 et guide un faisceau de pompage à l'intérieur de la fibre optique 3 de manière à stimuler l'amplification du faisceau signal se propageant dans le coeur monomode 10. Une gaine 15 entoure le coeur multimode 12.

L'indice de réfraction est le plus élevé dans le coeur central et le plus faible dans la gaine. Ainsi, les deux coeurs concentriques se comportent comme des guides d'ondes.

Le principal avantage de la structure à double coeur est que la lumière peut se propager dans le coeur externe jusqu'à son absorption par le matériau dopant du coeur central. Le faisceau signal est ainsi amplifié optiquement par les inversions de populations dues aux absorptions du faisceau de pompage par le matériau du coeur central.

Une telle structure permet de fournir un amplificateur à fibre optique en ligne avec un gain important.

Dans certaines applications, une telle structure peut également constituer un laser à fibre si la fibre est fermée par un réseau de Bragg.

Le problème principal rencontré dans l'utilisation de telles fibres optiques consiste dans le couplage des deux faisceaux optiques, c'est-à-dire le couplage du faisceau de pompage dans le coeur multimode en même temps que l'insertion du faisceau signal dans le coeur monomode.

Différentes solutions ont déjà été mises au point dans l'état de la technique pour remédier à ce problème de couplage.

Une première solution consiste à utiliser une fibre optique avec un coeur multimode de diamètre suffisamment grand pour permettre d'injecter plus facilement le faisceau de pompage dans la fibre. Cette solution n'est pas satisfaisante car elle entraîne l'augmentation de la dimension de la partie multimode de la fibre optique et par conséquent une diminution du nombre d'interactions entre le faisceau de pompage et le faisceau signal.

Une telle solution ne présente donc pas une efficacité optimale.

Une deuxième solution consiste à coupler transversalement le faisceau de pompage dans le coeur multimode de la fibre optique. Cette solution, illustrée sur la figure 2, est décrite dans la demande de brevet WO 95/10868.

Un faisceau de pompage provenant d'une diode laser 40a est couplé transversalement dans le coeur multimode 12 d'une fibre optique 3 à travers une fibre optique multimode 60a et un coupleur multimode 50a, ce dernier étant préférentiellement asymétrique. Le faisceau de pompage P se propage dans le coeur multimode 12, par réflexions multiples sur la gaine 15 entourant le coeur multimode 12.

Ces réflexions multiples permettent au faisceau de pompage P de traverser à plusieurs reprises le coeur monomode 10 dans lequel se propage le faisceau signal de manière à stimuler son amplification.

Selon un mode de réalisation particulier, une diode laser supplémentaire 40b peut injecter un autre faisceau à travers une autre fibre multimode 60b et un autre coupleur 50b de manière à augmenter la puissance de pompage afin d'obtenir une distribution de puissance plus uniforme le long de la fibre optique.

La solution proposée par le brevet WO 95/10868 présente l'avantage de coupler simultanément le faisceau de pompage avec le faisceau source.

Néanmoins, l'utilisation de fibres multimodes 60a, 60b et de coupleurs multimodes 50a, 50b induisent des pertes importantes. En effet, des pertes apparaissent au niveau du couplage entre les diodes laser 40a, 40b et l'entrée des fibres multimodes 60a, 60b, et également au niveau des coupleurs 50a, 50b.

De plus, cette solution de couplage du faisceau de pompage avec le faisceau signal dans une fibre double coeur n'est pas très compacte.

Une troisième solution consiste à créer des encoches dans la fibre optique afin de réaliser des miroirs aptes à défléchir le faisceau de pompage à l'intérieur du coeur multimode de la fibre optique.

Une telle solution, illustrée sur la figure 3, est décrite dans la demande de brevet WO 97/21124 qui concerne un procédé de couplage latéral d'un faisceau de pompage dans une fibre.

Des encoches 20 sont formées directement dans la paroi du coeur multimode 12 de la fibre optique 3 en utilisant des techniques de polissage mécaniques. Préférentiellement, ces encoches présentent une pointe à 90° et un angle de 45° par rapport à la paroi du coeur multimode 12.

Le faisceau de pompage P est alors défléchi sur ces encoches 20 de manière à se propager à l'intérieur du coeur multimode 12.

Dans le cadre d'une fibre optique standard avec un coeur multimode d'un diamètre de 125 $\mu$m et un coeur central d'un diamètre de 10 $\mu$m, la profondeur des encoches 20 ne doit pas excéder 52.5 $\mu$m.

La déflexion du faisceau de pompage P, qui présente typiquement une dimension horizontale de 112 $\mu$m, entraînera une perte de la moitié de la puissance lumineuse dans la direction horizontale. Un système de lentille peut être utilisé en amont pour focaliser le faisceau dans la direction horizontale avant sa déflexion dans l'encoche, mais cette solution alourdie le système de couplage proposé.

De plus, la réalisation d'encoches à l'intérieur de la fibre optique n'est pas évidente.

Le but de la présente invention est de pallier aux inconvénients de l'art antérieur. La présente invention propose une autre solution pour coupler simultanément un faisceau de pompage avec un faisceau source dans une fibre optique à double coeur.

Le but de la présente invention est de réaliser un tel couplage de manière simple et efficace. A cet effet, la présente invention propose d'utiliser la fibre optique à double coeur comme lentille afin de focaliser le faisceau de pompage à l'intérieur du coeur multimode sur une des faces d'extrémité de la fibre optique polie de manière à constituer un miroir apte à défléchir le faisceau de pompage à l'intérieur du coeur multimode.

La présente invention a plus particulièrement pour objet un amplificateur optique comprenant une fibre amplificatrice associée à une source laser émettant un faisceau optique de pompage vers la fibre, le faisceau de pompage permettant de stimuler l'amplification d'un faisceau source couplé simultanément avec le faisceau de pompage dans la fibre amplificatrice, caractérisé en ce que le faisceau de pompage est introduit dans la fibre latéralement par rapport à l'axe optique de la fibre, et en ce que la fibre comprend un miroir constitué par une face d'extrémité polie de manière à défléchir le faisceau de pompage à l'intérieur d'un cône d'ouverture numérique de la fibre amplificatrice.

Selon une autre caractéristique, le faisceau de pompage est focalisé sur le miroir par une lentille constituée par la courbure de la fibre amplificatrice.

Selon une autre caractéristique, la face d'extrémité est partiellement polie pour constituer un miroir, l'autre portion de la face d'extrémité de la fibre étant perpendiculaire à l'axe optique de manière à introduire le faisceau source dans l'alignement de l'axe optique.

Selon une autre caractéristique, l'angle de polissage θ du miroir de la face d'extrémité de la fibre est supérieur à l'angle de réflexion totale.

Selon une autre caractéristique, l'angle d'incidence β du faisceau de pompage par rapport à l'axe optique de la fibre est déterminé à partir de l'angle de polissage θ du miroir de la face d'extrémité de la fibre.

Selon une autre caractéristique, l'angle d'incidence α du faisceau source par rapport à l'axe optique de la fibre est déterminé à partir de l'angle de polissage θ du miroir de la face d'extrémité de la fibre.

Selon une autre caractéristique, le faisceau de pompage est introduit dans la fibre amplificatrice avec un angle d'incidence β de 90° et la face d'extrémité de la fibre est polie en miroir avec un angle de polissage θ de 45°.

L'amplificateur optique selon l'invention présente l'avantage de coupler efficacement le faisceau de pompage dans la fibre optique simultanément au faisceau source.

L'invention présente en outre l'avantage d'utiliser directement la fibre optique pour réaliser le couplage, ce qui apporte une solution facile et peu onéreuse au couplage d'un faisceau de pompage dans une fibre à double coeur.

De plus, le couplage du faisceau de pompage dans la fibre amplificatrice minimise les pertes d'énergie lumineuse car toute la largeur de la face d'entrée de la fibre peut être utilisée pour la déflexion du faisceau de pompage. Ainsi dans le cas d'une fibre standard de diamètre 125 $\mu$m et d'un faisceau de pompage avec une divergence de 112 $\mu$m, la totalité du faisceau de pompage sera défléchi dans le coeur multimode, et l'efficacité de l'amplification sera accrue.

En outre, le faisceau de pompage est un faisceau elliptique qui présente une grande divergence verticale, de l'ordre de 40 à 50°, et une faible divergence horizontale, de l'ordre de 5 à 10°. La réfraction du faisceau de pompage sur la partie courbe de la fibre compense la divergence verticale. Ainsi, les pertes d'énergie lumineuse seront limitées par la focalisation du faisceau à travers la courbure de la fibre.

L'amplificateur optique selon l'invention présente en outre l'avantage de présenter une face d'entrée clivée en biais qui permet de prévenir les réflexions lumineuses sur cette face d'entrée et d'éviter ainsi un effet laser dans la fibre amplificatrice.

De plus, le polissage d'une face d'extrémité d'une fibre optique est facile à réaliser dans un cadre industriel.

D'autres particularités et avantages de la présente invention apparaîtront au cours de la description qui suit, donnée à titre d'exemple illustratif et non limitatif faite en référence aux figures en annexe dans lesquelles :

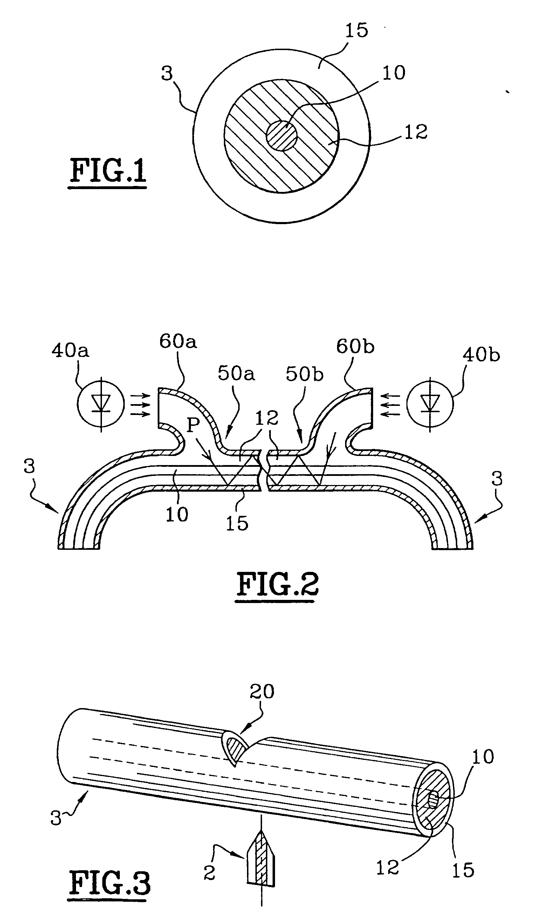

- la figure 1, déjà décrite, est une vue en coupe d'une fibre optique à double coeur conne de l'état de la technique,
- la figure 2, déjà décrite, est une vue de côté du couplage d'un faisceau de pompage dans une fibre optique double coeur selon une première méthode de l'état de la technique,
- la figure 3, déjà décrite, est une vue de côté du couplage d'un faisceau de pompage dans une fibre optique double coeur, selon une deuxième méthode de l'état de la technique,
- la figure 4 est une vue de côté du couplage d'un faisceau de pompage dans une fibre optique double coeur, selon un premier mode de réalisation de la présente invention,
- la figure 5 est une vue de côté du couplage d'un faisceau de pompage dans une fibre optique double coeur, selon un deuxième mode de réalisation de la présente invention,
- la figure 6 est une vue de côté du couplage d'un faisceau de pompage dans une fibre optique double coeur, selon un troisième mode de réalisation de la présente invention,
- la figure 7 est une vue en trois dimensions de la déflexion du faisceau de pompage,
- la figure 8 est une vue dans le plan perpendiculaire dans la déflexion du faisceau de pompage,
- la figure 9, est une vue dans le plan transverse dans la déflexion du faisceau de pompage.

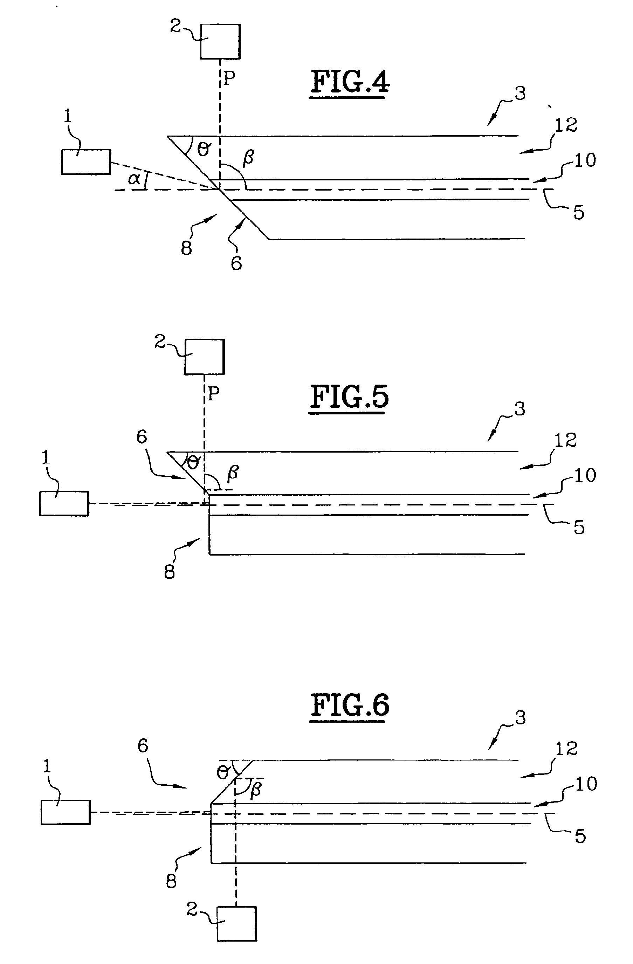

La figure 4 illustre un premier mode de réalisation du couplage d'un faisceau de pompage dans une fibre optique double coeur selon la présente invention.

La fibre optique 3 comprend un coeur central monomode 10 dans lequel se propage un faisceau signal émis par un laser source 1, par exemple un laser 1.55 $\mu$m.

Tout en restant dans le cadre de la présente invention, le faisceau signal peut provenir d'une autre fibre optique ou traverser des lentilles avant d'entrer dans la fibre optique 3 de l'amplificateur optique.

Le faisceau source pénètre dans la fibre optique 3 avec un angle d'incidence $\alpha$. En effet, la face d'extrémité 8 de la fibre optique 3 étant polie en miroir 6 réfléchissant, le faisceau source doit présenter un angle d'incidence non nul de manière à se propager dans le coeur monomode 10.

La fibre optique 3 comprend en outre un coeur multimode 12 entourant le coeur monomode 10. La différence d'indice entre les deux coeurs concentriques est suffisamment importante pour garantir une ouverture numérique du coeur multimode relativement grande.

L'objet de l'invention est de parvenir à coupler un faisceau de pompage P provenant d'un laser à injection 2 dans le coeur multimode 12. Cet objectif est atteint en réalisant un miroir 6 à partir de la face d'entrée 8 de la fibre optique 3.

Le faisceau de pompage P est défléchi dans la fibre optique 3 par le miroir 6 constitué par la face d'extrémité 8 polie de la fibre optique 3.

La fibre optique 3 est un cylindre et présente un rayon de courbure 7 qui peut avantageusement constituer une lentille focalisant le faisceau de pompage P sur le miroir 6.

Le miroir 6 présente un angle de polissage $\theta$ par rapport à l'axe optique 5 de la fibre 3. Cet angle $\theta$ conditionne la position du laser à injection 2 en fonction de l'indice de réfraction n de la fibre optique.

L'angle de polissage $\theta$ du miroir 6 permet de déterminer l'angle d'incidence $\beta$ du faisceau de pompage P.

Les formules théoriques sont les suivantes:

$$(1) \quad \beta + 2\theta = \pi$$

$$(2) \quad \sin(\pi/2 + \alpha - \theta) = n(fibre) * \sin(\pi/2 - \theta)$$

Toutefois, il est néanmoins requis que l'angle de polissage $\theta$ soit supérieur à l'angle de réflexion totale qui correspond à l'angle pour lequel le faisceau de pompage est entièrement réfléchi dans la fibre optique.

Pour obtenir une réflexion totale du faisceau pompe dans la fibre, il est nécessaire que:

$$n(fibre) * \sin(\beta/2) > 1$$

c'est à dire que:

$$n(fibre) * sin (\pi/2 - \theta) > 1$$

Cependant, avec cette contrainte, l'équation (2) n'a plus de solution. Il faut donc que l'un des couplages soit légèrement décalé dans les limites de l'ouverture numérique de la fibre.

On a alors:

$$\beta = \pi - 2\theta + \delta\beta$$

avec $\delta\beta$ < ouverture numérique de la fibre.

Les figures 4 et 5 sont dessinées avec un angle d'incidence $\beta$ du faisceau de pompage de 90° et un angle de polissage $\theta$ de 45°, pour une réflexion entre l'air et le verre de la fibre optique.

Les figures 5 et 6 illustrent un deuxième et troisième mode de réalisation du couplage d'un faisceau de pompage dans une fibre optique double coeur selon la présente invention.

Selon ces modes de réalisation, la face d'entrée 8 de la fibre 3 est partiellement polie en miroir 6 de manière à permettre la réflexion du faisceau de pompage P dans le coeur multimode 12 tout en permettant d'aligner le signal source 1 avec l'axe optique 5 de la fibre optique 3. L'angle d'incidence $\alpha$ du faisceau source sera alors nul.

Un quatrième mode de réalisation, non illustré, consiste à réaliser le clivage partiel illustré sur la figure 5 selon une symétrie de révolution. Un clivage droit au centre de la face d'entrée de la fibre permet d'introduire le faisceau signal dans le coeur monomode central dans l'axe optique de la fibre. Le miroir poli sur la circonférence de la fibre selon une symétrie de révolution permet d'introduire plusieurs faisceaux de pompage dans le coeur multimode en plusieurs points de la face d'entrée de la fibre.

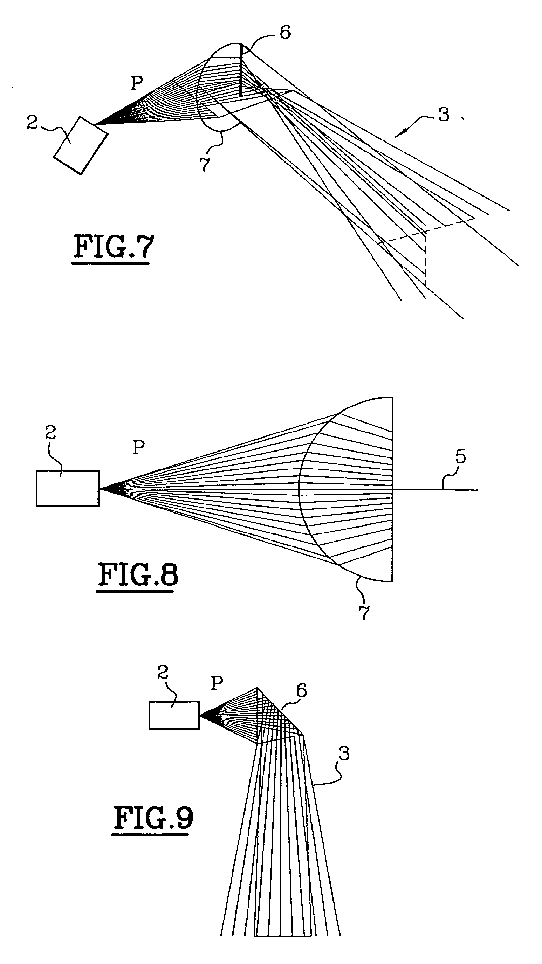

Les figures 7 à 9, illustrent des simulations de la déflexion du faisceau de pompage P dans le coeur multimode de la fibre optique 3.

Ces simulations ont été réalisées pour une fibre optique standard présentant un rayon de courbure de 62,5 $\mu$m, pour laquelle la face d'extrémité 8 a été polie à 45° en miroir 6.

On voit clairement que la courbure 7 de la fibre optique 3 fait office de lentille pour le faisceau de pompage P et la face d'extrémité 8 de la fibre optique fait office de miroir 6 pour réfléchir le faisceau de pompage à l'intérieur d'un cône d'ouverture numérique du coeur multimode 12.

**Revendications**

1. Amplificateur optique comprenant une fibre amplificatrice (3) associée à une source laser (2) émettant un faisceau optique de pompage vers la fibre, le faisceau de pompage permettant de stimuler l'amplification d'un faisceau source couplé simultanément avec le faisceau de pompage dans la fibre amplificatrice, **caractérisé en ce que** le faisceau de pompage (P) est introduit dans la fibre (3) latéralement par rapport à l'axe optique (5) de la fibre, et **en ce que** la fibre (3) comprend un miroir (6) constitué par une face d'extrémité (8) polie de manière à défléchir le faisceau de pompage (P) à l'intérieur d'un cône d'ouverture numérique de la fibre amplificatrice (3).

2. Amplificateur optique selon la revendication 1, **caractérisé en ce que** le faisceau de pompage (P) est focalisé sur le miroir (6) par une lentille (7) constituée par la courbure de la fibre amplificatrice (3).

3. Amplificateur optique selon les revendications 1 et 2, **caractérisé en ce que** la face d'extrémité (8) est partiellement polie pour constituer un miroir (6), l'autre portion de la face d'extrémité (8) de la fibre (3) étant perpendiculaire à l'axe optique (5) de manière à introduire le faisceau source (1) dans l'alignement de l'axe optique (5).

4. Amplificateur optique selon l'une des revendications précédentes, **caractérisé en ce que** l'angle de polissage $\theta$ du miroir (6) de la face d'extrémité (8) de la fibre (3) est supérieur à l'angle de réflexion totale.

5. Amplificateur optique selon la revendication 4, **caractérisé en ce que** l'angle d'incidence $\beta$ du faisceau de pompage (P) par rapport à l'axe optique (5) de la fibre (3) est déterminé à partir de l'angle de polissage $\theta$ du miroir (6) de la face d'extrémité (8) de la fibre (3).

6. Amplificateur optique selon la revendication 4, **caractérisé en ce que** l'angle d'incidence $\alpha$ du faisceau source (1) par rapport à l'axe optique (5) de la fibre (3) est déterminé à partir de l'angle de polissage $\theta$ du miroir (6) de la face d'extrémité (8) de la fibre (3).

7. Amplificateur selon l'une quelconque des revendications précédentes, **caractérisé en ce que** le faisceau de pompage (P) est introduit dans la fibre amplificatrice (3) avec un angle d'incidence β de 90°, la face d'extrémité (8) de la fibre (3) étant polie en miroir (6) avec un angle de polissage θ de 45°.

## Claims

1. An optical amplifier comprising an amplifier fiber (3) associated with a laser source (2) emitting a pump light beam towards the fiber, the pump beam serving to stimulate amplification of a source beam coupled simultaneously with the pump beam into the optical fiber, the amplifier being **characterized in that** the pump beam (P) is introduced into the fiber (3) laterally relative to the optical axis (5) of the fiber, and **in that** the fiber (3) has a mirror (6) constituted by an end face (8) polished in such a manner as to deflect the pump beam (P) into the inside of a numerical aperture cone of the amplifier fiber (3).

2. An optical amplifier according to claim 1, **characterized in that** the pump beam (P) is focused on the mirror (6) by a lens (7) constituted by the curvature of the amplifier fiber (3).

3. An optical amplifier according to claims 1 and 2, **characterized in that** the portion of the end face (8) is polished to constitute a mirror (6), the other portion of the end face (8) of the fiber (3) being perpendicular to the optical fiber (3) so as to introduce the source beam (1) in alignment with the optical axis (5).

4. An optical amplifier according to any preceding claim, **characterized in that** the polish angle θ of the mirror (6) of the end face (8) of the fiber (3) is greater than the total reflection angle.

5. An optical amplifier according to claim 4, **characterized in that** the angle of incidence β of the pump beam (P) relative to the optical axis (5) of the fiber (3) is determined from the polish angle θ of the mirror (6) of the end face (8) of the fiber (3).

6. An optical fiber according to claim 4, **characterized in that** the angle of incidence α of the source beam (1) relative to the optical axis (5) of the fiber (3) is determined from the polish angle θ of the mirror (6) of the end face (8) of the fiber (3).

7. An amplifier according to any preceding claim, **characterized in that** the pump beam (P) is introduced into the amplifier fiber (3) with an angle of incidence β of 90°, the end face (8) of the fiber (3) being polished to form a mirror (6) with a polish angle θ of 45°.

## Patentansprüche

1. Optischer Verstärker mit einer Verstärkungsfaser (3), die mit einer Laserquelle (2) verbunden ist, welche einen optischen Pumpstrahl in Richtung der Faser aussendet, wobei der Pumpstrahl die Stimulation der Verstärkung eines Quellenstrahls erlaubt, der gleichzeitig mit dem Pumpstrahl in der Verstärkungsfaser gekoppelt ist, **dadurch gekennzeichnet, dass** der Pumpstrahl (P) seitlich zu der optischen Achse (5) der Faser in die Faser (3) eingeführt wird, und dass die Faser (3) einen Spiegel (6) aufweist, der aus einer geschliffenen Endfläche (8) besteht, so dass der Pumpstrahl (P) im Inneren eines numerischen Öffnungskegels der Verstärkungsfaser (3) abgelenkt wird.

2. Optischer Verstärker nach Anspruch 1, **dadurch gekennzeichnet, dass** der Pumpstrahl (P) durch eine Linse (7) auf den Spiegel (6) fokussiert wird, wobei die Linse durch die Krümmung der Verstärkungsfaser (3) gebildet wird.

3. Optischer Verstärker nach den Ansprüchen 1 und 2, **dadurch gekennzeichnet, dass** die Endfläche (8) teilweise geschliffen ist, so dass sie einen Spiegel (6) bildet, wobei der andere Teil der Endfläche (8) der Faser (3) senkrecht zur optischen Achse (5) verläuft, um den Quellenstrahl (1) in die Fluchtlinie der optischen Achse (5) zu bringen.

4. Optischer Verstärker nach einem der vorhergehenden Ansprüche, **dadurch gekennzeichnet, dass** der Schleifwinkel θ des Spiegels (6) der Endfläche (8) der Faser (3) größer ist als der totale Reflexionswinkel.

5. Optischer Verstärker nach Anspruch 4, **dadurch gekennzeichnet, dass** der Einfallwinkel $\beta$ des Pumpstrahls (P) zu der optischen Achse (5) der Faser (3) über den Schleifwinkel $\theta$ des Spiegels (6) der Endfläche (8) der Faser (3) bestimmt wird.

6. Optischer Verstärker nach Anspruch 4, **dadurch gekennzeichnet, dass** der Einfallwinkel $\alpha$ des Quellenstrahls (1) zu der optischen Achse (5) der Faser (3) über den Schleifwinkel $\theta$ des Spiegels (6) der Endfläche (8) der Faser (3) bestimmt wird.

7. Verstärker nach einem der vorhergehenden Ansprüche, **dadurch gekennzeichnet, dass** der Pumpstrahl (P) mit einem Einfallwinkel $\beta$ von 90° in die Verstärkungsfaser (3) eingeführt wird, wobei die Endfläche (8) der Faser (3) mit einem Schleifwinkel $\theta$ von 45° zum Spiegel (6) geschliffen ist.

EP 1 030 412 B1

FIG.1

FIG.2

FIG.3

FIG.4

FIG.5

FIG.6

FIG.7

FIG.8

FIG.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   US 561682 A
*   WO 9510868 A

*   WO 9721124 A